# EUROPEAN PATENT APPLICATION

(11) **EP 1 936 822 A1**
(43) Date of publication of application: **25.06.2008**
(21) Application number: 07019341.2
(22) Date of filing: 02.10.2007
(51) Int. Cl.: H04B 1/40

(54) **Voice data RF cellular or WLAN IC**

(30) Priority: 19.12.2006 US 641999; 08.03.2007 US 715653
(71) Applicant: Broadcom Corporation, Irvine, CA 92617 (US)
(72) Inventor: Rofougaran, Ahmadreza, Newport Coast 92657 CA (US)
(74) Representative: Jehle, Volker Armin

(57) **Abstract**

An integrated circuit (IC) includes a baseband processing module, a radio frequency (RF) section, and an interface module. The baseband processing module coupled to determine when the IC is in a wireless local area network (WLAN) mode and when in the WLAN mode, the baseband processing module is further coupled to convert an outbound voice signal into an outbound WLAN voice symbol stream; convert an inbound WLAN voice symbol stream into an inbound voice signal; convert outbound data into an outbound WLAN data symbol stream; and convert an inbound WLAN data symbol stream into inbound data. The RF section is coupled to convert an inbound WLAN RF voice signal into the inbound WLAN voice symbol stream; convert the outbound WLAN voice symbol stream into an outbound WLAN RF voice signal; convert an inbound WLAN RF data signal into the inbound WLAN data symbol stream; and convert the outbound WLAN data symbol stream into an outbound WLAN RF data signal. The interface module couples the baseband processing module to the RF section.

## Description

This patent application is claiming priority under 35 USC § 120 as a continuation-in-part patent application of co-pending patent application entitled VOICE/DATA/RF INTEGRATED CIRCUIT, having a filing date of 12/19/2006, and a serial number of 11/641,999.

### CROSS REFERENCE TO RELATED PATENTS -NOT APPLICABLE

### STATEMENT REGARDING FEDERALLY SPONSORED RESEARCH OR DEVELOPMENT - NOT APPLICABLE

### INCORPORATION-BY-REFERENCE OF MATERIAL SUBMITTED ON A COMPACT DISC - NOT APPLICABLE

### BACKGROUND OF THE INVENTION

### TECHNICAL FIELD OF THE INVENTION

This invention relates generally to wireless communication systems and more particularly to integrated circuits of transceivers operating within such systems.

### DESCRIPTION OF RELATED ART

Communication systems are known to support wireless and wire lined communications between wireless and/or wire lined communication devices. Such communication systems range from national and/or international cellular telephone systems to the Internet to point-to-point in-home wireless networks. Each type of communication system is constructed, and hence operates, in accordance with one or more communication standards. For instance, wireless communication systems may operate in accordance with one or more standards including, but not limited to, IEEE 802.11, Bluetooth, advanced mobile phone services (AMPS), digital AMPS, global system for mobile communications (GSM), code division multiple access (CDMA), local multi-point distribution systems (LMDS), multi-channel-multi-point distribution systems (MMDS), radio frequency identification (RFID), Enhanced Data rates for GSM Evolution (EDGE), General Packet Radio Service (GPRS), and/or variations thereof.

Depending on the type of wireless communication system, a wireless communication device, such as a cellular telephone, two-way radio, personal digital assistant (PDA), personal computer (PC), laptop computer, home entertainment equipment, RFID reader, RFID tag, et cetera communicates directly or indirectly with other wireless communication devices. For direct communications (also known as point-to-point communications), the participating wireless communication devices tune their receivers and transmitters to the same channel or channels (e.g., one of the plurality of radio frequency (RF) carriers of the wireless communication system or a particular RF frequency for some systems) and communicate over that channel(s). For indirect wireless communications, each wireless communication device communicates directly with an associated base station (e.g., for cellular services) and/or an associated access point (e.g., for an in-home or in-building wireless network) via an assigned channel. To complete a communication connection between the wireless communication devices, the associated base stations and/or associated access points communicate with each other directly, via a system controller, via the public switch telephone network, via the Internet, and/or via some other wide area network.

For each wireless communication device to participate in wireless communications, it includes a built-in radio transceiver (i.e., receiver and transmitter) or is coupled to an associated radio transceiver (e.g., a station for in-home and/or in-building wireless communication networks, RF modem, etc.). As is known, the receiver is coupled to an antenna and includes a low noise amplifier, one or more intermediate frequency stages, a filtering stage, and a data recovery stage. The low noise amplifier receives inbound RF signals via the antenna and amplifies then. The one or more intermediate frequency stages mix the amplified RF signals with one or more local oscillations to convert the amplified RF signal into baseband signals or intermediate frequency (IF) signals. The filtering stage filters the baseband signals or the IF signals to attenuate unwanted out of band signals to produce filtered signals. The data recovery stage recovers raw data from the filtered signals in accordance with the particular wireless communication standard.

As is also known, the transmitter includes a data modulation stage, one or more intermediate frequency stages, and a power amplifier. The data modulation stage converts raw data into baseband signals in accordance with a particular wireless communication standard. The one or more intermediate frequency stages mix the baseband signals with one or more local oscillations to produce RF signals. The power amplifier amplifies the RF signals prior to transmission via an antenna.

While transmitters generally include a data modulation stage, one or more IF stages, and a power amplifier, the particular implementation of these elements is dependent upon the data modulation scheme of the standard being supported by the transceiver. For example, if the baseband modulation scheme is Gaussian Minimum Shift Keying (GMSK), the data modulation stage functions to convert digital words into quadrature modulation symbols, which have a constant amplitude and varying phases. The IF stage includes a phase locked loop (PLL) that generates an oscillation at a desired RF frequency, which is modulated based on the varying phases produced by the data modulation stage. The phase modulated RF signal is then amplified by the power amplifier in accordance with a transmit power level setting to produce a phase modulated RF signal.

As another example, if the data modulation scheme is 8-PSK (phase shift keying), the data modulation stage functions to convert digital words into symbols having varying amplitudes and varying phases. The IF stage includes a phase locked loop (PLL) that generates an oscillation at a desired RF frequency, which is modulated based on the varying phases produced by the data modulation stage. The phase modulated RF signal is then amplified by the power amplifier in accordance with the varying amplitudes to produce a phase and amplitude modulated RF signal.

As yet another example, if the data modulation scheme is x-QAM (16, 64, 128, 256 quadrature amplitude modulation), the data modulation stage functions to convert digital words into Cartesian coordinate symbols (e.g., having an in-phase signal component and a quadrature signal component). The IF stage includes mixers that mix the in-phase signal component with an in-phase local oscillation and mix the quadrature signal component with a quadrature local oscillation to produce two mixed signals. The mixed signals are summed together and filtered to produce an RF signal that is subsequently amplified by a power amplifier.

As the desire for wireless communication devices to support multiple standards continues, recent trends include the desire to integrate more functions on to a single chip. However, such desires have gone unrealized when it comes to implementing baseband and RF on the same chip for multiple wireless communication standards.

Therefore, a need exists for an integrated circuit (IC) that implements baseband and RF of multiple wireless communication standards on the same IC die.

### BRIEF SUMMARY OF THE INVENTION

The present invention is directed to apparatus and methods of operation that are further described in the following Brief Description of the Drawings, the Detailed Description of the Invention, and the claims.
According to an aspect of the invention, an integrated circuit (IC) comprises:
a baseband processing module coupled to:
   determine when the IC is in a wireless local area network (WLAN) mode;
   when the IC is in the WLAN mode, the baseband processing module is further coupled to:
      convert an outbound voice signal into an outbound WLAN voice symbol stream;
      convert an inbound WLAN voice symbol stream into an inbound voice signal;
      convert outbound data into an outbound WLAN data symbol stream; and
      convert an inbound WLAN data symbol stream into inbound data;
a radio frequency (RF) section coupled to:
   convert an inbound WLAN RF voice signal into the inbound WLAN voice symbol stream;
   convert the outbound WLAN voice symbol stream into an outbound WLAN RF voice signal;
   convert an inbound WLAN RF data signal into the inbound WLAN data symbol stream; and
   convert the outbound WLAN data symbol stream into an outbound WLAN RF data signal; and
an interface module coupled to convey the inbound WLAN voice symbol stream and the outbound WLAN voice symbol stream between the baseband processing module and the RF section when the IC is in a voice mode and to convey the inbound WLAN data symbol stream and the outbound WLAN data symbol stream between the baseband processing module and the RF section when the IC is in a data mode.
Advantageously, the determining when the IC is in the WLAN mode comprises:
determining whether the IC is currently affiliated with a basic service set (BSS) or an independent basic service set (IBSS) to establish the WLAN mode;
when the IC is not currently affiliated with the BSS or the IBSS, determining whether the IC can affiliate with the BSS or the IBSS;
when the IC can affiliate with the BSS or the IBSS, affiliating with the BSS or the IBSS to establish the WLAN mode.
Advantageously, the determining whether the IC can affiliate with the BSS or the IBSS comprises at least one of:
monitoring for a beacon frame; and
transmitting a probe request frame and monitoring for a response frame.
Advantageously, the baseband processing module further functions to:
determining whether the WLAN mode is dropped prior to an end of a current voice or data communication; and
when the WLAN mode is dropped prior to the end of the current voice or data communication, switching to a cellular mode wherein the baseband processing module:
   convert the outbound voice signal into an outbound cellular voice symbol stream;
   convert an inbound cellular voice symbol stream into the inbound voice signal;
   convert the outbound data into an outbound cellular data symbol stream; and
   convert an inbound cellular data symbol stream into the inbound data.
Advantageously, the baseband processing module further functions to:
determine whether the WLAN mode can be established when the IC is not in the WLAN mode;
when the WLAN mode cannot be established, establish a cellular mode wherein the baseband processing module is further coupled to:
   convert the outbound voice signal into an outbound cellular voice symbol stream;
   convert an inbound cellular voice symbol stream into the inbound voice signal;
   convert the outbound data into an outbound cellular data symbol stream; and
   convert an inbound cellular data symbol stream into the inbound data.
Advantageously, the baseband processing module further functions to:
determine whether the WLAN mode can be established while in the cellular mode and prior to an end of the current voice or data communication;
when the WLAN mode can be established, switching to the WLAN mode.
Advantageously, the RF section is further coupled to:
convert an inbound cellular RF voice signal into the inbound cellular voice symbol stream;
convert the outbound cellular voice symbol stream into an outbound cellular RF voice signal;
convert an inbound cellular RF data signal into the inbound cellular data symbol stream; and
convert the outbound cellular data symbol stream into an outbound cellular RF data signal.
Advantageously, the baseband processing module comprises:
an encoding module coupled to encode the outbound voice or data signal to produce an encoded signal;
interleaving module coupled to interleave the encoded signal to produce an interleaved signal;
a multiplexer coupled to provide the interleaved signal to a WLAN path when the IC is in the WLAN mode, to a cellular path when the IC is not in the WLAN mode; and
the WLAN path includes a mapping module and a frequency to time domain conversion module, wherein the mapping module maps the interleaved data into frequency domain symbols and the frequency to time domain conversion module converts the frequency domain symbols into the outbound WLAN voice symbol stream or the outbound WLAN data symbol stream.
Advantageously, the cellular path comprises:
a cellular data path that includes a cellular data mapping module and a cellular data frequency to time domain conversion module, wherein the cellular data mapping module maps the interleaved data into cellular data frequency domain symbols and the cellular data frequency to time domain conversion module converts the cellular data frequency domain symbols into the outbound data symbol stream; and
a cellular voice path that includes an encryption module and an Gaussian Minimum Shift Keying (GMSK) modulation module, wherein encryption module encrypts the interleaved data to produce encrypted data and the GMSK modulation module modulates the encrypted data to produce the outbound voice symbol stream.
Advantageously, the cellular path comprises:
a cellular voice path that includes an encryption module and an Gaussian Minimum Shift Keying (GMSK) modulation module, wherein encryption module encrypts the interleaved data to produce encrypted data and the GMSK modulation module modulates the encrypted data to produce the outbound voice symbol stream; and
a cellular data path that includes a cellular data encryption module and a cellular data GMSK modulation module, wherein cellular data encryption module encrypts the interleaved data to produce cellular data encrypted data and the cellular data GMSK modulation module modulates the cellular data encrypted data to produce the outbound data symbol stream.
Advantageously, the cellular path comprises:
a cellular data path that includes a cellular data mapping module and a cellular data frequency to time domain conversion module, wherein the cellular data mapping module maps the interleaved data into cellular data frequency domain symbols and the cellular data frequency to time domain conversion module converts the cellular data frequency domain symbols into the outbound data symbol stream; and
a cellular voice path that includes an orthogonal modulation module, a data randomizing module, a long code generating module, and a quadrature section, wherein the orthogonal modulation module modules the interleaved data to produce code division modulated data, the data randomizing module randomizes the code division modulated data in accordance with a code produced by the long code generating module to produce random code division data, and the quadrature section converts the random code division data into the outbound voice symbol stream.
Advantageously, the cellular path comprises:
a cellular data path that includes a cellular data encryption module and a cellular data GMSK modulation module, wherein cellular data encryption module encrypts the interleaved data to produce cellular data encrypted data and the cellular data GMSK modulation module modulates the cellular data encrypted data to produce the outbound data symbol stream; and
a cellular voice path that includes an orthogonal modulation module, a data randomizing module, a long code generating module, and a quadrature section, wherein the orthogonal modulation module modulates the interleaved data to produce code division modulated data, the data randomizing module randomizes the code division modulated data in accordance with a code produced by the long code generating module to produce random code division data, and the quadrature section converts the random code division data into the outbound voice symbol stream.
Advantageously, the RF section comprises:
a quadrature-polar module coupled to generate at least one of a normalized in-phase signal component, a normalized quadrature signal component, phase modulation information, and amplitude modulation information from at least one of: the outbound WLAN voice symbol stream, the outbound WLAN data symbol stream, a first outbound cellular voice symbol stream, and a first outbound cellular data symbol stream;
an up conversion module coupled to generate an up-converted signal from at least one of the normalized in-phase signal component, the normalized quadrature signal component, and the phase modulation information; and
a power amplifier module coupled to amplify the up-converted signal in accordance with the amplitude modulation information or a default amplitude gain setting to produce the outbound WLAN RF voice signal, the outbound WLAN RF data signal, an outbound cellular RF voice signal, or an outbound cellular RF data signal.
Advantageously, the RF section further comprises:
a Gaussian Minimum Shift Keying (GMSK) transmitter module coupled to convert a second outbound cellular voice symbol stream or a second outbound cellular data symbol stream into a GMSK signal, wherein the power amplifier module amplifies the GMSK signal in accordance with the default amplitude gain setting to produce the outbound WLAN RF voice signal, the outbound WLAN RF data signal, the outbound cellular RF voice signal, or the outbound cellular RF data signal.
According to an aspect of the invention, an integrated circuit (IC) comprises:
an encoding module coupled to encode an outbound voice signal or an outbound data signal to produce an encoded signal;
interleaving module coupled to interleave the encoded signal to produce an interleaved signal;
a multiplexer coupled to provide the interleaved signal to a Wireless Local Area Network (WLAN) path when the IC is in a WLAN mode, to a cellular path when the IC is not in the WLAN mode; and
the WLAN path includes a mapping module and a frequency to time domain conversion module, wherein the mapping module maps the interleaved data into frequency domain symbols and the frequency to time domain conversion module converts the frequency domain symbols into an outbound WLAN voice symbol stream or an outbound WLAN data symbol stream; and
a radio frequency (RF) section coupled to:
   convert the outbound WLAN voice symbol stream into an outbound WLAN RF voice signal; and
   convert the outbound WLAN data symbol stream into an outbound WLAN RF data signal.
Advantageously, the RF section is further coupled to:
convert an inbound WLAN RF data signal into an inbound WLAN data symbol stream; and
convert an inbound WLAN RF voice signal into an inbound WLAN voice symbol stream.
Advantageously, the IC further comprises:
a WLAN receive path that includes a time to frequency domain conversion module and a demapping module, the time to frequency domain conversion module converts the inbound WLAN data symbol stream into inbound WLAN data frequency domain symbols and converts the inbound WLAN voice symbol stream into inbound WLAN voice frequency domain symbols, the demapping module demaps the inbound WLAN data frequency domain symbols or the inbound WLAN voice frequency domain symbols to produce inbound WLAN interleaved data;
a demultiplexer coupled to output the inbound WLAN interleaved data from the WLAN receive path when the IC is in the WLAN mode and to output inbound cellular interleaved data when the IC is not in the WLAN mode;
a deinterleaving module coupled to deinterleave the inbound WLAN interleaved data or the inbound cellular interleaved data to produce inbound encoded data; and
a decoding module coupled to decode the inbound encoded data to produce an inbound voice signal or inbound data.
Advantageously, the IC further comprises:
the RF section is further coupled to convert an inbound cellular RF data signal into an inbound cellular data symbol stream and convert an inbound cellular RF voice signal into an inbound cellular voice symbol stream;
a cellular data receive path that includes a cellular data time to frequency domain conversion module and a cellular data demapping module, the cellular data time to frequency domain conversion module converts the inbound cellular data symbol stream into inbound cellular data frequency domain symbols and the demapping module demaps the inbound cellular data frequency domain symbols to produce the inbound cellular interleaved data; and
a cellular voice receive path that includes Gaussian Minimum Shift Keying (GMSK) demodulation module and a decryption module, wherein the GMSK demodulation module demodulates the inbound cellular voice symbol stream into an inbound cellular voice encrypted signal and the decryption module decrypts the inbound cellular voice encrypted signal to produce the inbound cellular interleaved data.
Advantageously, the IC further comprises:
the RF section is further coupled to convert an inbound cellular RF data signal into an inbound cellular data symbol stream and convert an inbound cellular RF voice signal into an inbound cellular voice symbol stream;
a cellular data receive path that includes a data Gaussian Minimum Shift Keying (GMSK) demodulation module and a data decryption module, wherein the data GMSK demodulation module demodulates the inbound cellular data symbol stream into an inbound cellular data encrypted signal and the cellular decryption module decrypts the inbound cellular data encrypted signal to produce the inbound cellular interleaved data; and
a cellular voice receive path that includes a voice Gaussian Minimum Shift Keying (GMSK) demodulation module and a voice decryption module, wherein the voice GMSK demodulation module demodulates the inbound cellular voice symbol stream into an inbound cellular voice encrypted signal and the voice decryption module decrypts the inbound cellular voice encrypted signal to produce the inbound cellular interleaved data.
Advantageously, the IC further comprises:
the RF section is further coupled to convert an inbound cellular RF data signal into an inbound cellular data symbol stream and convert an inbound cellular RF voice signal into an inbound cellular voice symbol stream;
a cellular data receive path that includes a cellular data time to frequency domain conversion module and a cellular data demapping module, the cellular data time to frequency domain conversion module converts the inbound cellular data symbol stream into inbound cellular data frequency domain symbols and the demapping module demaps the inbound cellular data frequency domain symbols to produce the inbound cellular interleaved data; and
a cellular voice receive path that includes a quadrature section, a long code generating module, a data de-randomizing module, and an orthogonal demodulation module, the quadrature section converts the inbound cellular voice symbol stream into random code division voice data, the data de-randomizing module de-randomizes the random code division voice data in accordance with a code produced by the long code generating module to produce code division modulated data, and the orthogonal demodulation module demodulates the code division modulated data to produce the inbound cellular interleaved data.
Advantageously, the IC further comprises:
the RF section is further coupled to convert an inbound cellular RF data signal into an inbound cellular data symbol stream and convert an inbound cellular RF voice signal into an inbound cellular voice symbol stream;
a cellular data receive path that includes a data Gaussian Minimum Shift Keying (GMSK) demodulation module and a data decryption module, wherein the data GMSK demodulation module demodulates the inbound cellular data symbol stream into an inbound cellular data encrypted signal and the cellular decryption module decrypts the inbound cellular data encrypted signal to produce the inbound cellular interleaved data; and
a cellular voice receive path that includes a quadrature section, a long code generating module, a data de-randomizing module, and an orthogonal demodulation module, the quadrature section converts the inbound cellular voice symbol stream into random code division voice data, the data de-randomizing module de-randomizes the random code division voice data in accordance with a code produced by the long code generating module to produce code division modulated data, and the orthogonal demodulation module demodulates the code division modulated data to produce the inbound cellular interleaved data.
Advantageously, the cellular path comprises:
a cellular data path that includes a cellular data mapping module and a cellular data frequency to time domain conversion module, wherein the cellular data mapping module maps the interleaved data into cellular data frequency domain symbols and the cellular data frequency to time domain conversion module converts the cellular data frequency domain symbols into the outbound data symbol stream; and
a cellular voice path that includes an encryption module and an Gaussian Minimum Shift Keying (GMSK) modulation module, wherein encryption module encrypts the interleaved data to produce encrypted data and the GMSK modulation module modulates the encrypted data to produce the outbound voice symbol stream.
Advantageously, the cellular path comprises:
a cellular voice path that includes an encryption module and an Gaussian Minimum Shift Keying (GMSK) modulation module, wherein encryption module encrypts the interleaved data to produce encrypted data and the GMSK modulation module modulates the encrypted data to produce the outbound voice symbol stream; and
a cellular data path that includes a cellular data encryption module and a cellular data GMSK modulation module, wherein cellular data encryption module encrypts the interleaved data to produce cellular data encrypted data and the cellular data GMSK modulation module modulates the cellular data encrypted data to produce the outbound data symbol stream.
Advantageously, the cellular path comprises:
a cellular data path that includes a cellular data mapping module and a cellular data frequency to time domain conversion module, wherein the cellular data mapping module maps the interleaved data into cellular data frequency domain symbols and the cellular data frequency to time domain conversion module converts the cellular data frequency domain symbols into the outbound data symbol stream; and
a cellular voice path that includes an orthogonal modulation module, a data randomizing module, a long code generating module, and a quadrature section, wherein the orthogonal modulation module modules the interleaved data to produce code division modulated data, the data randomizing module randomizes the code division modulated data in accordance with a code produced by the long code generating module to produce random code division data, and the quadrature section converts the random code division data into the outbound voice symbol stream.
Advantageously, the cellular path comprises:
a cellular data path that includes a cellular data encryption module and a cellular data GMSK modulation module, wherein cellular data encryption module encrypts the interleaved data to produce cellular data encrypted data and the cellular data GMSK modulation module modulates the cellular data encrypted data to produce the outbound data symbol stream; and
a cellular voice path that includes an orthogonal modulation module, a data randomizing module, a long code generating module, and a quadrature section, wherein the orthogonal modulation module modulates the interleaved data to produce code division modulated data, the data randomizing module randomizes the code division modulated data in accordance with a code produced by the long code generating module to produce random code division data, and the quadrature section converts the random code division data into the outbound voice symbol stream.
Advantageously, the RF section comprises:
a quadrature-polar module coupled to generate at least one of a normalized in-phase signal component, a normalized quadrature signal component, phase modulation information, and amplitude modulation information from at least one of: the outbound WLAN voice symbol stream, the outbound WLAN data symbol stream, a first outbound cellular voice symbol stream, and a first outbound cellular data symbol stream;
an up conversion module coupled to generate an up-converted signal from at least one of the normalized in-phase signal component, the normalized quadrature signal component, and the phase modulation information; and
a power amplifier module coupled to amplify the up-converted signal in accordance with the amplitude modulation information or a default amplitude gain setting to produce the outbound WLAN RF voice signal, the outbound WLAN RF data signal, an outbound cellular RF voice signal, or an outbound cellular RF data signal.
Advantageously, the RF section further comprises:
a Gaussian Minimum Shift Keying (GMSK) transmitter module coupled to convert a second outbound cellular voice symbol stream or a second outbound cellular data symbol stream into a GMSK signal, wherein the power amplifier module amplifies the GMSK signal in accordance with the default amplitude gain setting to produce the outbound WLAN RF voice signal, the outbound WLAN RF data signal, the outbound cellular RF voice signal, or the outbound cellular RF data signal.

Other features and advantages of the present invention will become apparent from the following detailed description of the invention made with reference to the accompanying drawings.

### BRIEF DESCRIPTION OF THE SEVERAL VIEWS OF THE DRAWING(S)

Figure 1 is a schematic block diagram of an embodiment of a wireless communication system in accordance with the present invention;
Figure 2 is a schematic block diagram of another embodiment of a wireless communication system in accordance with the present invention;
Figure 3 is a schematic block diagram of an embodiment of an integrated circuit (IC) in accordance with the present invention;
Figures 4-6 are logic diagrams of embodiments of methods for multiple wireless communication standard communications in accordance with the present invention;
Figure 7 is a schematic block diagram of an embodiment of a baseband processing module in accordance with the present invention;
Figure 8 is a schematic block diagram of an embodiment of a cellular path in accordance with the present invention;
Figure 9 is a schematic block diagram of another embodiment of a cellular path in accordance with the present invention;
Figure 10 is a schematic block diagram of another embodiment of a cellular path in accordance with the present invention;
Figure 11 is a schematic block diagram of another embodiment of a cellular path in accordance with the present invention;
Figure 12 is a schematic block diagram of an embodiment of a radio frequency (RF) section in accordance with the present invention; and
Figure 13 is a schematic block diagram of another embodiment of an integrated circuit (IC) in accordance with the present invention.

### DETAILED DESCRIPTION OF THE INVENTION

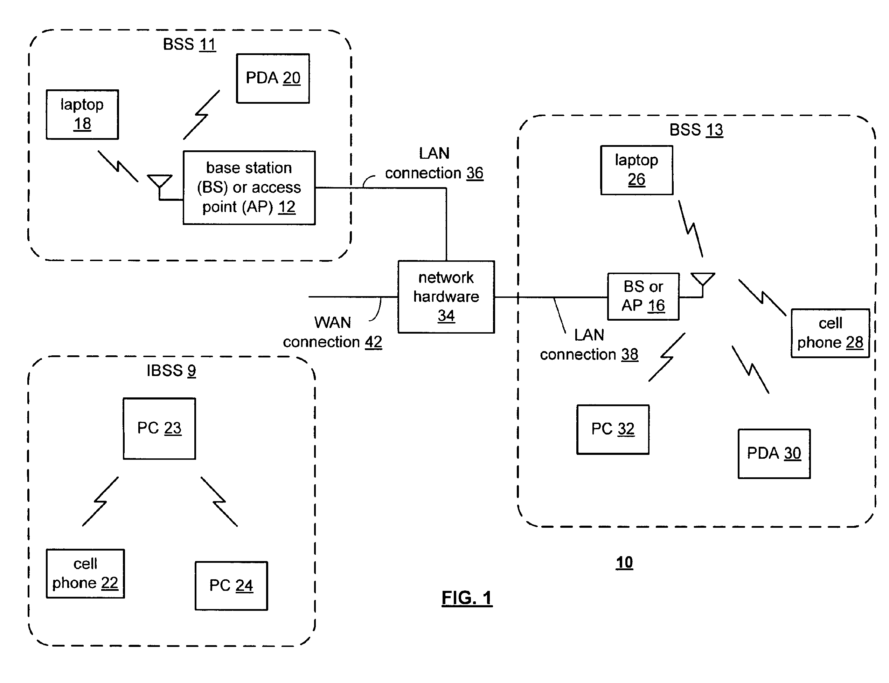

Figure 1 is a schematic block diagram of a wireless communication environment that includes a communication device 10 communicating with one or more of a wireline non-real-time device 12, a wireline real-time device 14, a wireline non-real-time and/or real-time device 16, a base station 18, a wireless non-real-time device 20, a wireless real-time device 22, and a wireless non-real-time and/or real-time device 24. The communication device 10, which may be a personal computer, laptop computer, personal entertainment device, cellular telephone, personal digital assistant, a game console, a game controller, and/or any other type of device that communicates real-time and/or non-real-time signals, may be coupled to one or more of the wireline non-real-time device 12, the wireline real-time device 14, and the wireline non-real-time and/or real-time device 16 via a wireless connection 28. The wireless connection 28 may be an Ethernet connection, a universal serial bus (USB) connection, a parallel connection (e.g., RS232), a serial connection, a fire-wire connection, a digital subscriber loop (DSL) connection, and/or any other type of connection for conveying data.

The communication device 10 communicates RF non-real-time data 25 and/or RF real-time data 26 with one or more of the base station 18, the wireless non-real-time device 20, the wireless real-time device 22, and the wireless non-real-time and/or real-time device 24 via one or more channels in a frequency band (fb_{A}) that is designated for wireless communications. For example, the frequency band may be 900 MHz, 1800 MHz, 1900 MHz, 2100 MHz, 2.4 GHz, 5 GHz, any ISM (industrial, scientific, and medical) frequency bands, and/or any other unlicensed frequency band in the United States and/or other countries. As a particular example, wideband code division multiple access (WCDMA) utilizes an uplink frequency band of 1920 - 1980 MHz and a downlink frequency band of 2110 - 2170 MHz. As another particular example, EDGE, GSM and GPRS utilize an uplink transmission frequency band of 890-915 MHz and a downlink transmission band of 935-960 MHz. As yet another particular example, IEEE 802.11 (g) utilizes a frequency band of 2.4 GHz frequency band.

The wireless real-time device 22 and the wireline real-time device 14 communicate real-time data that, if interrupted, would result in a noticeable adverse affect. For example, real-time data may include, but is not limited to, voice data, audio data, and/or streaming video data. Note that each of the real-time devices 14 and 22 may be a personal computer, laptop computer, personal digital assistant, a cellular telephone, a cable set-top box, a satellite set-top box, a game console, a wireless local area network (WLAN) transceiver, a Bluetooth transceiver, a frequency modulation (FM) tuner, a broadcast television tuner, a digital camcorder, and/or any other device that has a wireline and/or wireless interface for conveying real-time data with another device.

The wireless non-real-time device 20 and the wireline non-real-time device 12 communicate non-real-time data that, if interrupted, would not generally result in a noticeable adverse affect. For example, non-real-time data may include, but is not limited to, text messages, still video images, graphics, control data, emails, and/or web browsing. Note that each of the non-real-time devices 14 and 22 may be a personal computer, laptop computer, personal digital assistant, a cellular telephone, a cable set-top box, a satellite set-top box, a game console, a global positioning satellite (GPS) receiver, a wireless local area network (WLAN) transceiver, a Bluetooth transceiver, a frequency modulation (FM) tuner, a broadcast television tuner, a digital camcorder, and/or any other device that has a wireline and/or wireless interface for conveying real-time data with another device.

Depending on the real-time and non-real-time devices coupled to the communication unit 10, the communication unit 10 may participate in cellular voice communications, cellular data communications, video capture, video playback, audio capture, audio playback, image capture, image playback, voice over internet protocol (i.e., voice over IP), sending and/or receiving emails, web browsing, playing video games locally, playing video games via the internet, word processing generation and/or editing, spreadsheet generation and/or editing, database generation and/or editing, one-to-many communications, viewing broadcast television, receiving broadcast radio, cable broadcasts, and/or satellite broadcasts.

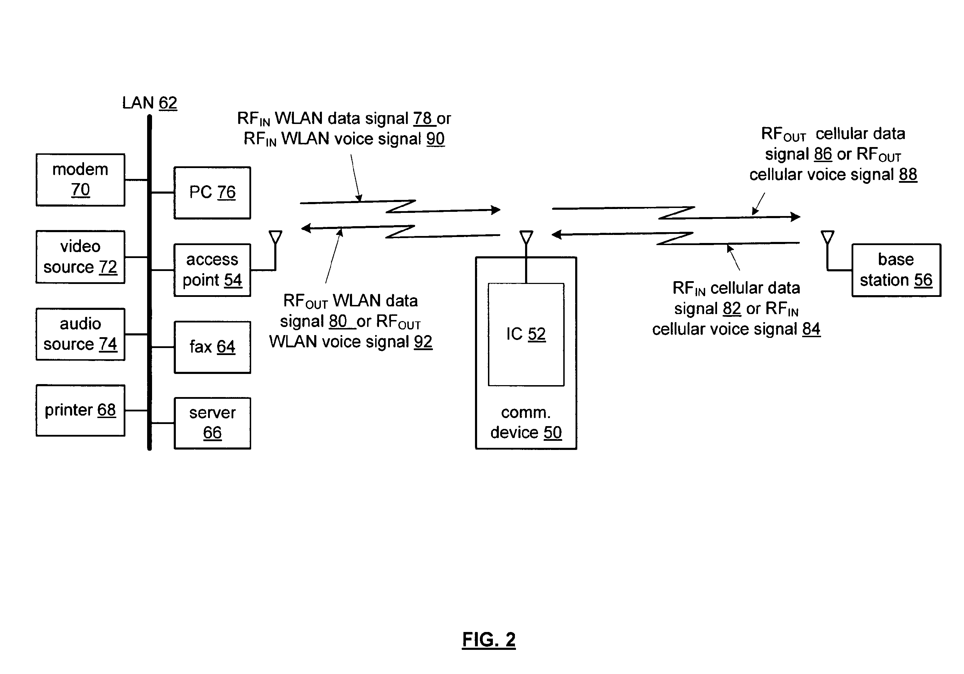

Figure 2 is a schematic block diagram of another embodiment of a wireless communication system that includes a communication device 50 associated with a cellular network and/or a wireless local area network (WLAN). The WLAN network is shown to include an access point 54, a local area network (LAN) bus 62, a modem 70, a video source 72, an audio source 74, a printer 68, a personal computer (PC) 76, a facsimile machine (fax) 64, and a server 66, but may include more or less components than shown. The cellular network is shown to include a base station 56, which may support voice communications and/or data communications. Note that the cellular network may include more components than the base station 56.

In this embodiment, the communication device 50, which may be one of the communication devices 18-32 of Figure 1 or another type of communication device, includes an integrated circuit (IC) 52 to communication with the cellular network and/or with the WLAN. Such a communication may include voice communications, audio communications, video communications, graphics communications, text communications, and/or data communications (e.g., emails, web browsing, short message services, etc.). For example, the communication device 50 may be receiving an audio file from the audio source 74 (e.g., a computer storing an MP3 file, a radio receiver, a cable set top box, a satellite receiver, a CD player, etc.), the server 66, and/or the PC 76 via the access point 54 as an inbound RF wireless network (WN) data signal 78. The IC 52 processes the inbound RF WN data signal 78 to produce inbound data that may be rendered audible by speaker circuitry of the IC 52 and/or communication device 50.

As another example, the communication device 50 may be receiving a video file from the video source 72 (e.g., a computer storing a video file, a cable set top box, a satellite receiver, a DVDD player, etc.), the server 66, and/or the PC 76 via the access point 54 as an inbound RF WN data signal 78. The IC 52 processes the inbound RF WN data signal 78 to produce inbound data that may be presented on a display (e.g., speakers and LCD, DLP, or plasma display panel) of the communication device 50.

As yet another example, the communication device 50 may record video, voice, and/or audio to produce a recorded file. In this example, the IC 52 may convert the recorded file into an outbound RF WN data signal 80 that is provided to the WLAN. The access point 54 recovers the recorded file and provides it to one of the other devices (e.g., PC 76, server 66, modem 70) for storage and/or forwarding onto the Internet.

As a further example, the modem 70, the PC 76, the server 66, the fax 64, and/or the printer 68 may provide a file to the access point 54 for communication to the communication device 50. In this instance, the access point 54 converts the file into the inbound WN data signal 78. The IC 52 processes the received the inbound WN data signal 78 to recapture the file, which may be presented on the communication device 50.

As yet a further example, the communication device 50 may have a graphics, text, and/or a data file for communication to a component of the WLAN. In this example, the IC 52 converts the graphics, text, and/or data file into the outbound RF WN data signal 80 that is provided to the access point 54 and/or to the WPAN 60. In one embodiment, the access point 54 recovers the graphics, text, and/or data file and provides it to the PC 76, the modem 70, the fax 64, the printer 68, and/or the server 66. Note that the file may include an address that identifies which component(s) of the WLAN are to receive the file.

More examples include voice and/or data communications between the communication device 50 and the base station 56 in accordance with one or more cellular communication standards, which includes, but is not limited to, past, present, and/or future versions of GSM, CDMA, wideband CDMA (WCDMA), EDGE, GPRS, AMPS, and digital AMPS. For instance, the IC 52 may process outbound voice signals to produce outbound RF voice signals 88 and process inbound RF voice signals 84 to produce inbound voice signals. The IC 52 may facilitate the presentation of the inbound and outbound voice signals on the communication device 50. Further the IC 52 may process outbound data signals to produce outbound RF data signals 86 and process inbound RF data signals 82 to produce inbound data signals. The IC 52 may facilitate the presentation of the inbound and outbound data signals on the communication device 50.

As a further example, when the communication device 50 is within the coverage area of the WLAN, communication via the WLAN is preferred over communication via the cellular network. For instance, the IC 52 supports voice-over-IP (internet protocol) communications, data-over-IP communications as well as the communications mentioned above. While, in one example, the WLAN is preferred over the cellular network, the selection of networks may be made by the user, may be made by a cost analysis of comparing the type of communication over the WLAN versus over the cellular network, may be a default setting, and/or may be done over both networks.

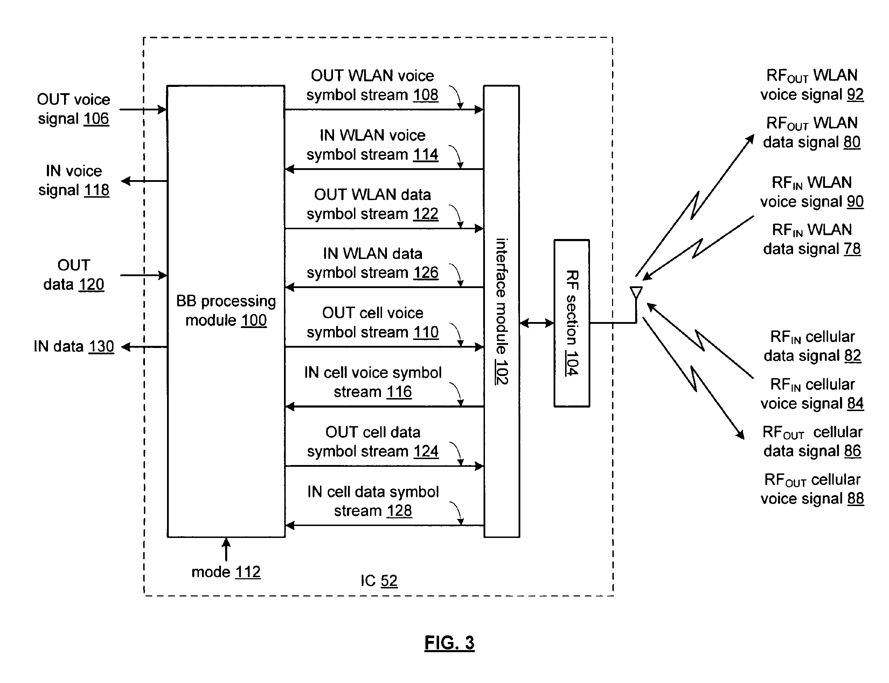

Figure 3 is a schematic block diagram of an embodiment of an integrated circuit (IC) 52 that includes a baseband (BB) processing module 100, an interface module 102, and an RF section 104. The BB processing module 100 may be a single processing device or a plurality of processing devices. Such a processing device may be a microprocessor, micro-controller, digital signal processor, microcomputer, central processing unit, field programmable gate array, programmable logic device, state machine, logic circuitry, analog circuitry, digital circuitry, and/or any device that manipulates signals (analog and/or digital) based on hard coding of the circuitry and/or operational instructions. The processing module(s) may have an associated memory and/or memory element, which may be a single memory device, a plurality of memory devices, and/or embedded circuitry of the processing module(s). Such a memory device may be a read-only memory, random access memory, volatile memory, non-volatile memory, static memory, dynamic memory, flash memory, cache memory, and/or any device that stores digital information. Note that when the processing module(s) implements one or more of its functions via a state machine, analog circuitry, digital circuitry, and/or logic circuitry, the memory and/or memory element storing the corresponding operational instructions may be embedded within, or external to, the circuitry comprising the state machine, analog circuitry, digital circuitry, and/or logic circuitry. Further note that, the memory element stores, and the processing module(s) executes, hard coded and/or operational instructions corresponding to at least some of the steps and/or functions illustrated in Figures 2-13.

The baseband processing module 100 is coupled to determine when the IC 52 is in a wireless local area network (WLAN) mode. This may be done in a variety of ways. For instance, the baseband processing module 100 may determine whether the IC 52 (and hence the communication device 50) is currently affiliated with a basic service set (BSS) or an independent basic service set (IBSS) to establish the WLAN mode. When affiliated with a BSS or and IBSS, the communication device 50 will have stored the addressing information of one or more access points. If the communication device 50 is not currently affiliated with a BSS or an IBSS, the baseband processing module 100 may determine whether the IC 52 (and hence the communication device 50) can affiliate with the BSS or the IBSS. This may be done by monitoring for a beacon frame and/or transmitting a probe request frame and monitoring for a response frame. When the IC can affiliate with the BSS or the IBSS (e.g., a beacon frame was detected and/or a response frame was received), the baseband processing module 100 affiliates the communication device 100 with the BSS or the IBSS to establish the WLAN mode.

In the WLAN mode, the baseband processing module 100 is coupled to convert an outbound voice signal 106 into an outbound WLAN voice symbol stream 108; convert an inbound WLAN voice symbol stream 114 into an inbound voice signal 118; convert outbound data 120 into an outbound WLAN data symbol stream 122; and convert an inbound WLAN data symbol stream 126 into inbound data 130. Such conversions may be done in accordance with a wireless network protocol (e.g., past, present, or future versions of Bluetooth, IEEE 802.11, ZIGBEE, RFID, etc.). For example, the inbound and outbound voice signals 106 and 118 may be processed to provide voice-over-IP via the WLAN.

The RF section 104, which may include a polar coordinate based architecture, a Cartesian coordinate based architecture, and/or a combination thereof, is coupled to convert an inbound WLAN RF voice signal 90 into the inbound WLAN voice symbol stream 114; convert the outbound WLAN voice symbol stream 108 into an outbound WLAN RF voice signal 92; convert an inbound WLAN RF data signal 78 into the inbound WLAN data symbol stream 126; and convert the outbound WLAN data symbol stream 122 into an outbound WLAN RF data signal 80.

The interface module 102, which may be implemented as described in co-pending patent application entitled VOICE/DATA/RF INTEGRATED CIRCUIT, having a filing date of 12/19/2006, and a serial number of 11/641,999, is coupled to convey the inbound WLAN voice symbol stream 114 and the outbound WLAN voice symbol stream 108 between the baseband processing module 100 and the RF section 104 when the IC is in a voice mode 112 and to convey the inbound WLAN data symbol stream 126 and the outbound WLAN data symbol stream 122 between the baseband processing module 100 and the RF section 104 when the IC is in a data mode 112.

When the IC 52 cannot establish the WLAN mode, it establishes a cellular mode. In the cellular mode 112, the baseband processing module is coupled to convert the outbound voice signal 106 into an outbound cellular voice symbol stream 110; convert an inbound cellular voice symbol stream 116 into the inbound voice signal 118; convert the outbound data 120 into an outbound cellular data symbol stream 124; and convert an inbound cellular data symbol stream 128 into the inbound data 130. The conversions of the voice signals 106 and 118 may be done in accordance with a cellular voice standard (e.g., past, present, or future versions of GSM, AMPS, CDMA, WCDMA, etc.). The conversion of the data 120 and 130 may be done in accordance with a cellular data protocol (e.g., past, present, or future versions of EDGE, GPRS, etc.).

In the cellular mode, the RF section 104 is coupled to convert an inbound cellular RF voice signal 84 into the inbound cellular voice symbol stream 116; convert the outbound cellular voice symbol stream 110 into an outbound cellular RF voice signal 88; convert an inbound cellular RF data signal 82 into the inbound cellular data symbol stream 128; and convert the outbound cellular data symbol stream 124 into an outbound cellular RF data signal 86.

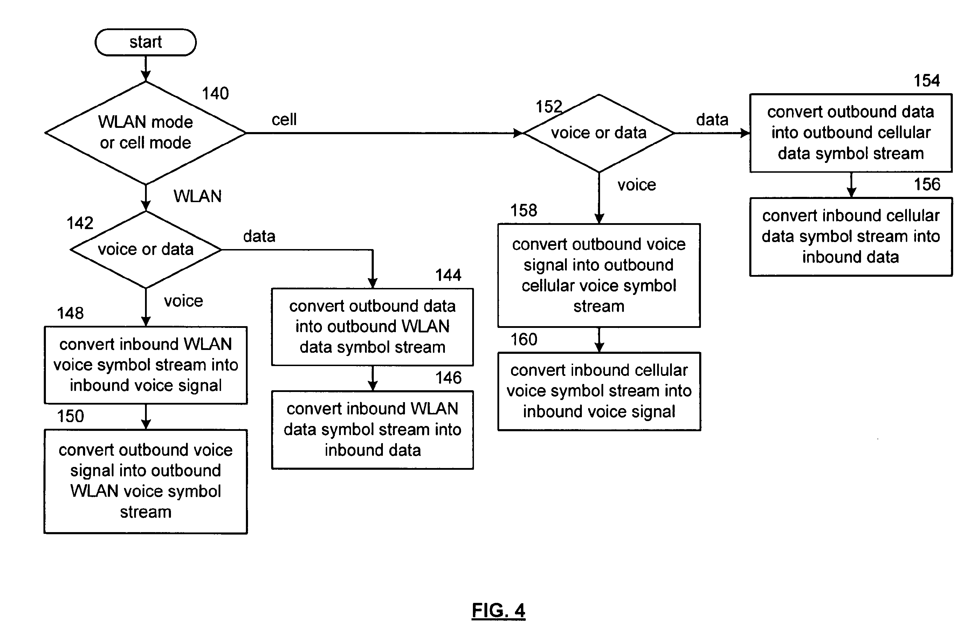

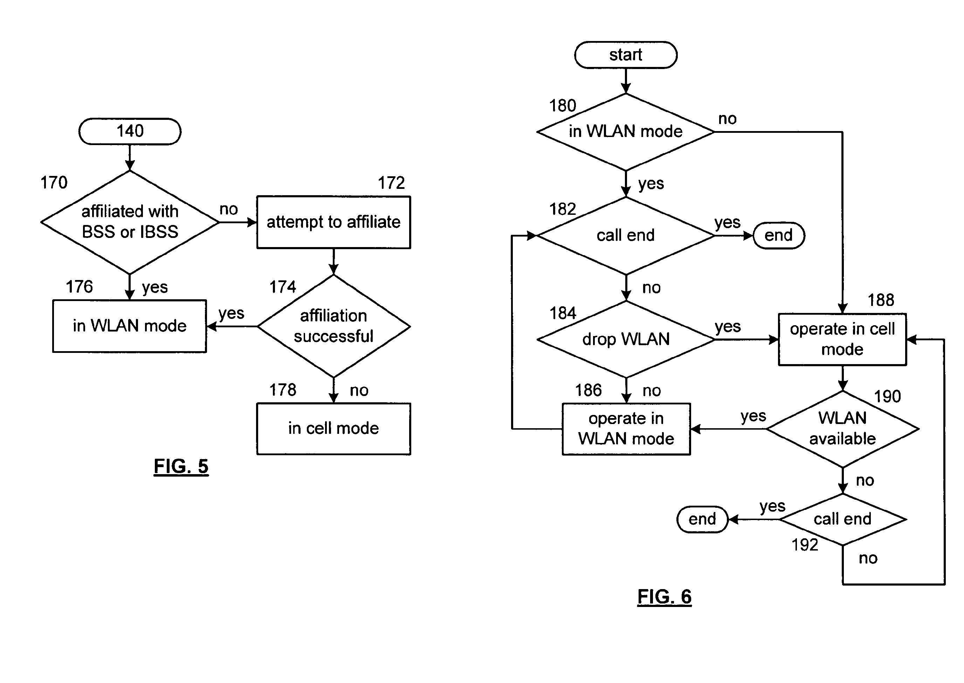

Figures 4-6 are logic diagrams of embodiments of methods for multiple wireless communication standard communications that may be performed by the baseband processing module 100. The method of Figure 4 begins at step 140 where the baseband processing module 100 determines whether the IC 52 is in a WLAN mode or a cellular mode. This will be described in greater detail with reference to Figure 5.

When the IC is in the WLAN mode, the method proceeds to step 142 where the baseband processing module 100 determines whether the IC is in a WLAN voice mode or a WLAN data mode. When the IC is in the WLAN voice mode, the method proceeds to step 148 where the baseband processing module converts the inbound WLAN voice symbol stream 114 into the inbound voice signal 118. The method then proceeds to step 150 where the baseband processing module 100 converts the outbound voice signal 106 into the outbound WLAN voice symbol stream 108. Note that step 150 is not dependent upon step 148 and may be performed prior to, and/or contemporaneously with, step 148.

When the IC is in the WLAN data mode, the method proceeds to step 144 where the baseband processing module converts the inbound WLAN data symbol stream 126 into the inbound data 130. The method then proceeds to step 146 where the baseband processing module 100 converts the outbound data 120 into the outbound WLAN data symbol stream 122. Note that step 146 is not dependent upon step 144 and may be performed prior to, and/or contemporaneously with, step 144.

When the IC is in the cellular mode, the method proceeds to step 152 where the baseband processing module 100 determines whether the IC is in a cellular voice mode or a cellular data mode. When the IC is in the cellular voice mode, the method proceeds to step 158 where the baseband processing module converts the inbound cellular voice symbol stream 116 into the inbound voice signal 118. The method then proceeds to step 160 where the baseband processing module 100 converts the outbound voice signal 106 into the outbound cellular voice symbol stream 110. Note that step 160 is not dependent upon step 158 and may be performed prior to, and/or contemporaneously with, step 158.

When the IC is in the cellular data mode, the method proceeds to step 154 where the baseband processing module converts the inbound cellular data symbol stream 128 into the inbound data 130. The method then proceeds to step 156 where the baseband processing module 100 converts the outbound data 120 into the outbound cellular data symbol stream 124. Note that step 156 is not dependent upon step 154 and may be performed prior to, and/or contemporaneously with, step 154.

Figure 5 is a logic diagram of a method for determining whether the IC 52 is in a WLAN mode or a cellular mode (e.g., step 140 of Figure 4). This method begins at step 170 where the baseband processing module 100 determines whether the IC 52 is currently affiliated with a basic service set (BSS) or an independent basic service set (IBSS). If yes, the method proceeds to step 176 and the WLAN mode is indicated.

If, however, the IC is not current affiliated with a BSS or an IBSS, the method proceeds to step 172 where the baseband processing module attempts to affiliate with a BSS or an IBSS. This may be done by monitoring for a beacon frame and/or transmitting a probe request frame and monitoring for a response frame. The method then proceeds to step 174 where the baseband processing module 100 determines whether the affiliation with a BSS or an IBSS was successful (e.g., received a beacon frame and/or received a response frame). If yes, the method proceeds to step 176. In not, the method proceeds to step 178 when the cellular mode is indicated.

The method of Figure 6 begins at step 180 where the baseband processing module determines when the IC 52 is in the WLAN mode. If yes, the method proceeds to step 182 where the baseband processing module determines whether the current communication or call has ended. If yes, the method is complete. If not, the method proceeds to step 184 where the baseband processing module determines whether the IC 52 has lost its affiliation with the BSS or the IBSS (e.g., dropped the WLAN due to a failure, out of range, etc.). If not, the process proceeds to step 186 where the baseband processing module 100 remains in the WLAN mode and the method loops back to step 182.

If the WLAN is dropped as determined at step 184 or the IC 52 is not in the WLAN mode as determined at step 180, the method proceeds to step 188 where the baseband processing module 100 operates in the cellular mode. The method then proceeds to step 180 where the baseband processing module determines whether the WLAN is available (e.g., whether the communication device 50 can affiliate with a BSS or an IBSS). When the WLAN is available, the method proceeds to step 186 where the baseband processing module switches to the WLAN mode. When the WLAN is not available, the method proceeds to step 192 where the baseband processing module determines whether the call has ended. If yes, the method is complete for this call. If not, the method loops back to step 188.

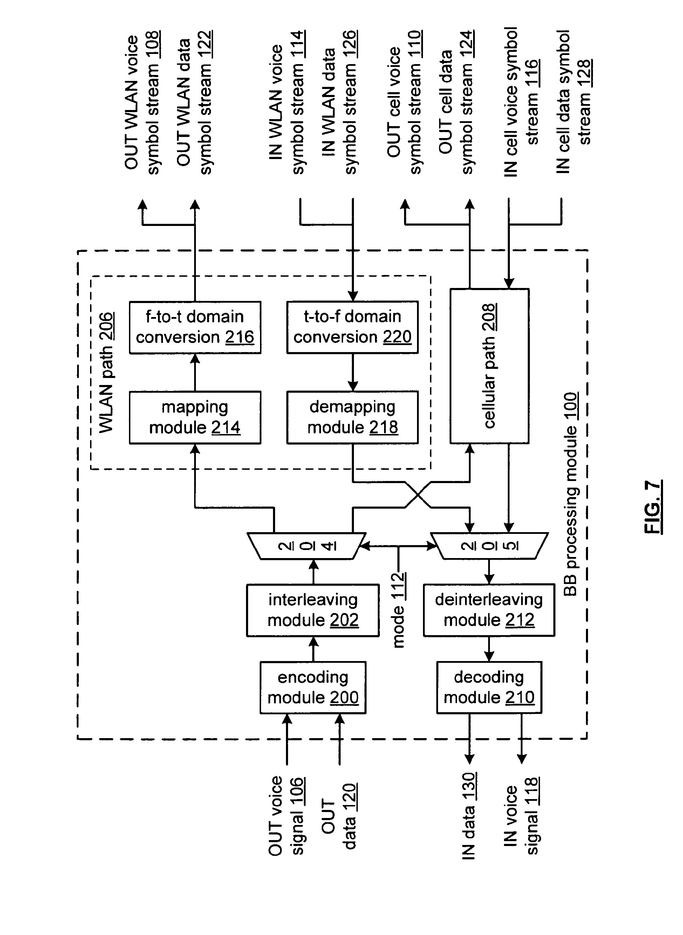

Figure 7 is a schematic block diagram of an embodiment of the baseband processing module 100 that includes an encoding module 200, an interleaving module 202, a multiplexer 204, a WLAN path 206, a cellular path 208, a demultiplexer 205, a deinterleaving module 212, and a decoding module 210. In this embodiment, the encoding and interleaving of the outbound voice signal 106 into the outbound WLAN or cellular voice symbol stream 108 or 110 are the same; the encoding and interleaving of the outbound data 120 into the outbound WLAN or cellular data symbol stream 122 or 124 are the same; the decoding and deinterleaving of the inbound WLAN or cellular voice symbol stream 114 or 116 into the inbound voice signal 118 are the same; and the decoding and deinterleaving of the inbound WLAN or cellular data symbol stream 126 or 128 into the inbound data 130 are the same. In another embodiment, the encoding/decoding and interleaving/deinterleaving are programmable to accommodate the WLAN mode and the cellular mode.

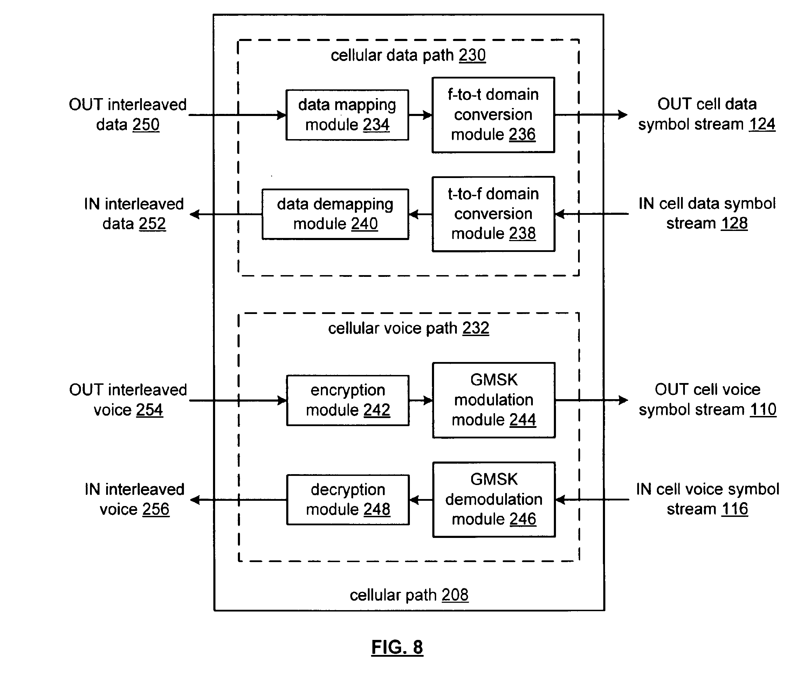

In operation, the encoding module 200, which may be a ½ rate or other rate convolutional encoder, a scrambler, a puncture module, and/or a speech coding module, is coupled to encode the outbound voice signal 106 or the outbound data 120 to produce an encoded signal. The interleaving module 202 is coupled to interleave the encoded signal to produce an interleaved signal. When the IC 52 is in the WLAN mode 112, the multiplexer 204 provides the interleaved signal to the WLAN path 206 and when the IC 52 is in the cellular mode 112, the multiplexer 204 provides the interleaved signal to the cellular path 208 (various embodiments of which will be described with reference to Figures 8-11).

In the WLAN mode, the WLAN path 206 receives the interleaved signal via a mapping module 214. The mapping module 214, which may be a quadrature amplitude module mapping module, a quadrature phase shift keying mapping module, a frequency shift keying mapping module, and/or a minimum shift keying mapping module, maps the interleaved signal to produce frequency domain symbols. Note that the mapping may be done in accordance with one or more WLAN standards (e.g., past, present, or future versions of Bluetooth, IEEE 802.11, ZIGBEE, RFID, etc.).

A frequency to time domain conversion module 216 (e.g., inverse fast Fourier transform (IFFT)) of the WLAN path 206 converts the frequency domain symbols into the outbound WLAN voice symbol stream 108 or the outbound WLAN data symbol stream 122.

For inbound signals in the WLAN mode, a time to frequency conversion module 220 (e.g., fast Fourier transform (FFT)) of the WLAN path 206 converts the inbound WLAN voice symbol stream 114 or the inbound WLAN data symbol stream 126 into inbound frequency domain symbols. A demapping module 218 of the WLAN path 206 demaps (e.g., performs the complimentary function of the mapping module 214) the frequency domain symbols to produce an inbound interleaved signal.

The demultiplexer 205 provides the inbound interleaved signal to the deinterleaving module 212. The deinterleaving module 212 deinterleaves (e.g., performs the complimentary function of the interleaving module 202) to produce an inbound encoded signal. The decoding module 210 decodes (e.g., performs the complimentary function of the encoding module 200) the inbound encoded signal to produce the inbound data 130 or the inbound voice signal 118.

When the IC 52 is in the cellular mode, the multiplexer 204 provides the interleaved signal to the cellular path 208, which converts the interleaved signal into the outbound cellular voice symbol stream 110 or the outbound cellular data symbol stream 124. The cellular path 208 also converts the inbound cellular voice symbol stream 116 or the inbound cellular data symbol stream 128 into the inbound interleaved signal. The demultiplexer provides the inbound interleaved signal to the deinterleaving module 212, which produces the inbound encoded signal. The decoding module 210 decodes the inbound encoded signal to produce the inbound data 130 or the inbound voice signal 118.

Figure 8 is a schematic block diagram of an embodiment of the cellular path 208 to support EDGE data communications and GSM voice communications. In this embodiment, the cellular path 208 includes a cellular data path 230 and a cellular voice data path 232. In this embodiment, the cellular data path 230 includes a data mapping module 234, a frequency to time domain conversion module 236, a time to frequency domain conversion module 238 and a data demapping module 240. The cellular voice path 232 includes an encryption module 242, a Gaussian minimum shift keying (GMSK) modulation module 244, a GMSK demodulation module 246, and a decryption module 248.

In operation, the cellular data mapping module 234 (e.g., an 8-PSK mapping module) maps the outbound interleaved data 250 into cellular data frequency domain symbols. The cellular data frequency to time domain conversion module 236 (e.g., IFFT) converts the cellular data frequency domain symbols into the outbound data symbol stream 124.

The time to frequency domain conversion module 238 (e.g., FFT) converts the inbound cellular data symbol stream 128 into cellular data frequency domain symbols. The cellular data demapping module 240 demaps (e.g., performs the complimentary function of the data mapping module 234) to produce the inbound interleaved data 252.

When the IC is in the cellular voice mode, the encryption module 242 encrypts the interleaved voice signal 254 to produce encrypted data. The GMSK modulation module 246, which may also include a frequency hopping function, frequency shift modulates the encrypted data to produce the outbound voice symbol stream 110.

The GMSK demodulation module 246 demodulates (e.g., performs the complimentary function of the GMSK modulation module 244) the inbound cellular voice symbol stream 116 to produce inbound encrypted data. The decryption module 248 decrypts (e.g., performs the complimentary function of the encryption module 242) to produce the inbound interleaved voice signal 256.

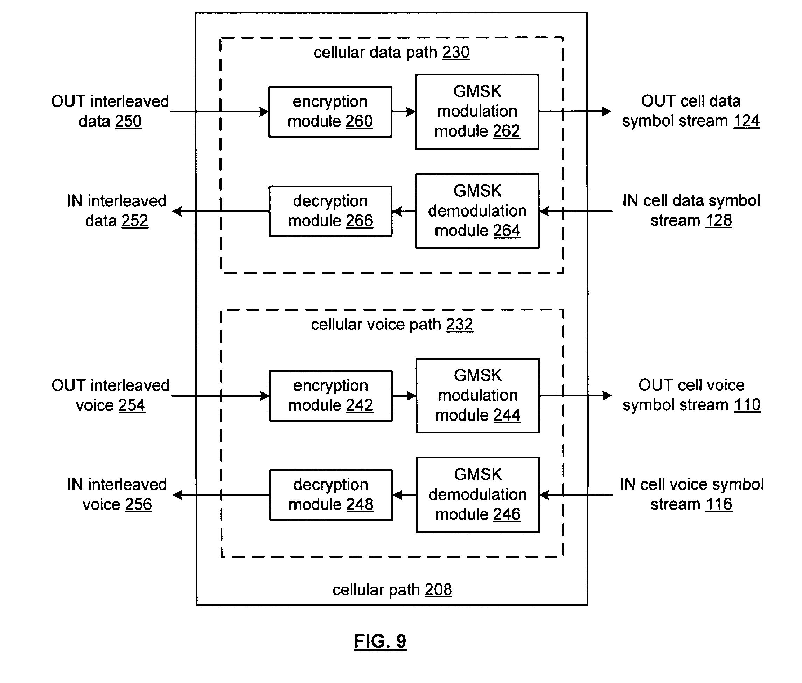

Figure 9 is a schematic block diagram of another embodiment of the cellular path 208 to support GPRS data communications and GSM voice communications. In this embodiment, the cellular data path 230 includes an encryption module 260, a GMSK modulation module 262, a GMSK demodulation module 264, and a decryption module 266. The cellular voice path 232 includes the encryption module 242, the GMSK modulation module 244, the GMSK demodulation module 246, and the decryption module 248 and operates as previously discussed.

When the IC is in the cellular data mode, the encryption module 260 encrypts the outbound interleaved data signal 250 to produce encrypted data. The GMSK modulation module 262, which may also include a frequency hopping function, frequency shift modulates the encrypted data to produce the outbound cellular data symbol stream 124.

The GMSK demodulation module 264 demodulates (e.g., performs the complimentary function of the GMSK modulation module 262) the inbound cellular data symbol stream 128 to produce inbound encrypted data. The decryption module 266 decrypts (e.g., performs the complimentary function of the encryption module 260) to produce the inbound interleaved data 252.

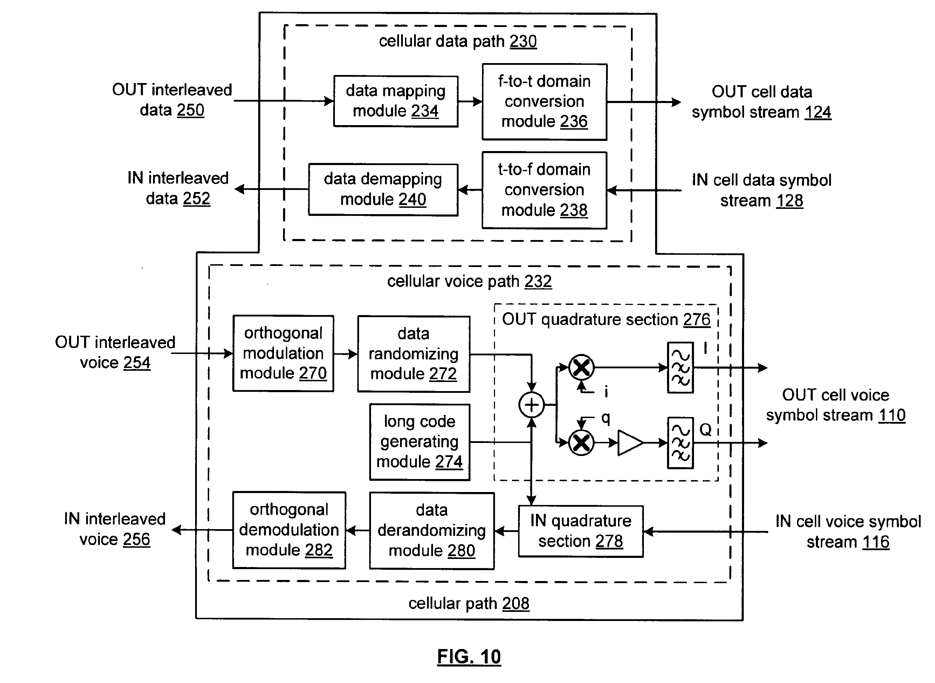

Figure 10 is a schematic block diagram of another embodiment of the cellular path 208 to support EDGE data communications and CDMA (which includes WCDMA) voice communications. In this embodiment, the cellular data path 230 the data mapping module 234, the frequency to time domain conversion module 236, the time to frequency domain conversion module 238 and the data demapping module 240 and operates as previously discussed. The cellular voice path 232 includes an orthogonal modulation module 270, a data randomizing module 272, a long code generating module 274, an outbound quadrature section 276, an inbound quadrature section 278, a data de-randomizing module 280, and an orthogonal demodulation module 282.

When the IC 52 is in the cellular voice mode, the orthogonal modulation module 270 modules the outbound interleaved voice signal 254 to produce code division modulated data. Note that the orthogonal modulation module 270 performs the CDMA encoding, which may be done using Walsh codes. The data randomizing module 272 randomizes the code division modulated data in accordance with a code produced by the long code generating module 274 to produce random code division data. The outbound quadrature section 276 converts the random code division data into the outbound cellular voice symbol stream 110.

For inbound cellular voice signals, the inbound quadrature section 278 converts the inbound cellular voice symbol stream 116 into random code division voice data. The data de-randomizing module 280 de-randomizes (e.g., performs the complimentary function of the randomizing module 272) the random code division voice data in accordance with a code produced by the long code generating module 274 to produce code division modulated data. The orthogonal demodulation module 282 demodulates (e.g., performs the complimentary function of the orthogonal modulation module 270) the code division modulated data to produce the inbound cellular interleaved voice signal 256.

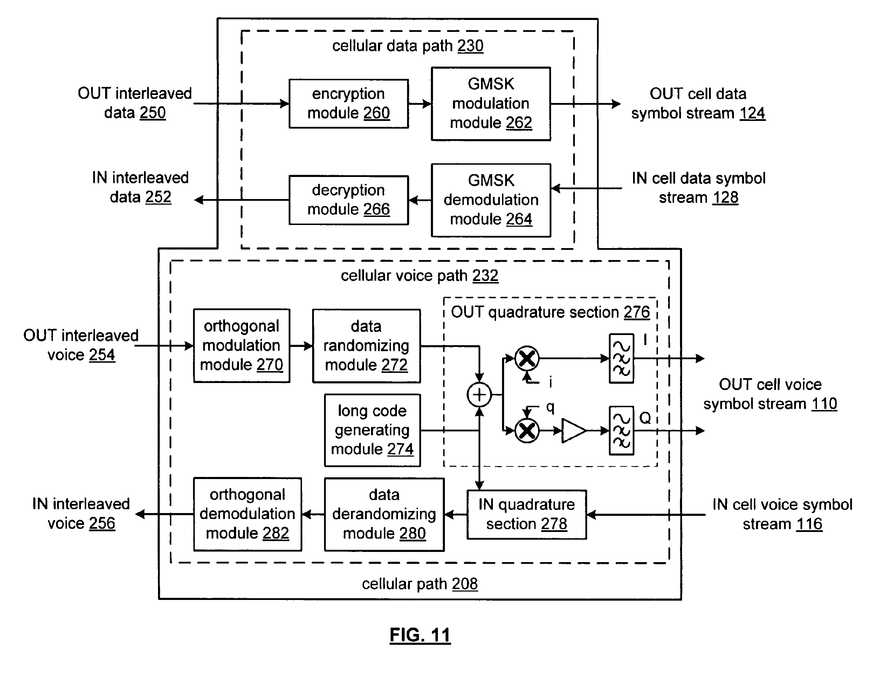

Figure 11 is a schematic block diagram of another embodiment of the cellular path 208 to support GPRS data communications and CDMA (which includes WCDMA) voice communications. In this embodiment, the cellular data path 230 includes the encryption module 260, the GMSK modulation module 262, the GMSK demodulation module 264, and the decryption module 266 and operates as previously discussed. The cellular voice path 232 includes the orthogonal modulation module 270, the data randomizing module 272, the long code generating module 274, the outbound quadrature section 276, the inbound quadrature section 278, the data de-randomizing module 280, and the orthogonal demodulation module 282 and operates as previously discussed.

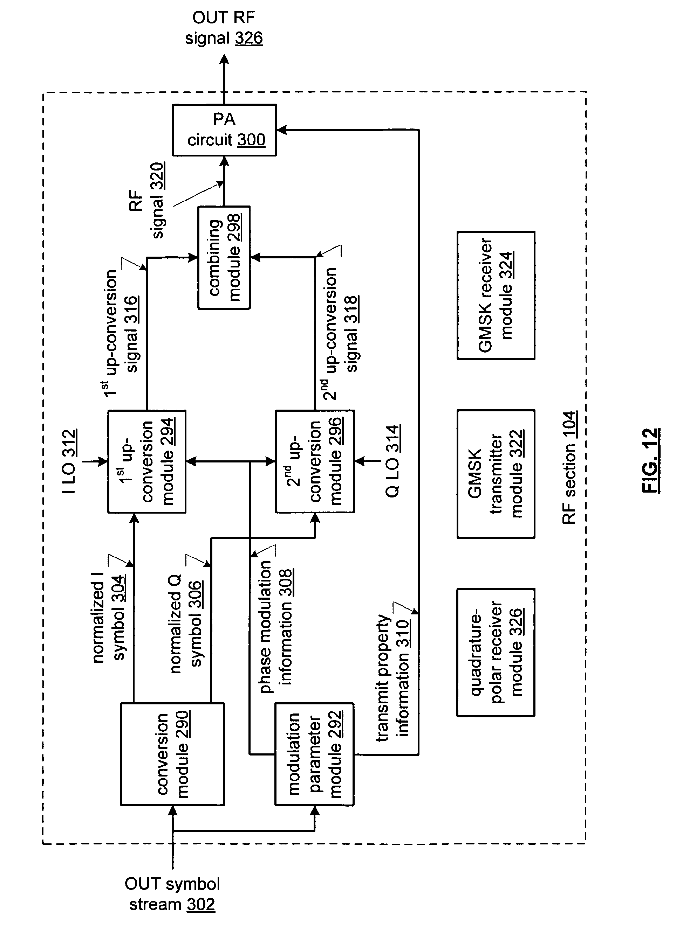

Figure 12 is a schematic block diagram of an embodiment of the RF section 104 that includes a conversion module 290, a modulation parameter module 292, a 1^{st} up-conversion module 294, a 2^{nd} up-conversion module 296, a combining module 298, and a power amplifier circuit 300. The RF section 104 may further include a quadrature-polar receiver module 326, a GMSK transmitter module 322, and/or a GMSK receiver module 324. The quadrature-polar receiver module 326 performs the complimentary function of modules 290-300. The GMSK transmitter module 322 converts the outbound cellular data symbol steam 124 into the outbound RF data signal 86 and GMSK receiver module 324 converts the inbound RF data signal 82 into the inbound cellular data symbol stream 124 when the IC 52 is in a cellular data GPRS mode. The GMSK transmitter module 322 also converts the outbound cellular voice symbol steam 1110 into the outbound RF cellular voice signal 88 and GMSK receiver module 324 also converts the inbound RF cellular voice signal 84 into the inbound cellular voice symbol stream 116 when the IC 52 is in a cellular voice GSM mode.

When the IC 52 is in the WLAN mode, the cellular data EDGE mode, or the cellular voice CDMA mode, the conversion module 290 and the modulation parameter module 292 receive the outbound symbol stream 302 (e.g., the WLAN or cellular outbound voice or data symbol stream 108, 112, 110, or 124), where each symbol of the symbol stream 302 is expressed as a hybrid coordinate having an in-phase component and a quadrature component. The conversion module 290 converts the in-phase component and the quadrature component of a symbol into a normalized I symbol 304 and a normalized Q symbol 306. This may be done by setting the amplitude of the in-phase component and the quadrature component of the symbol to the same value. For example, the in-phase component is A_{I}sin(ω_{d}(t)) and the quadrature component is A_{Q}cos(ω_{d}(t)), where A_{I} and A_{Q} are the amplitudes of the in-phase and quadrature components, respectively. By setting the amplitudes A_{I} and A_{Q} to the same value (e.g., 1 or A₀), the normalized I symbol 304 would be sin(ω_{d}(t)) and the normalized Q symbol 306 would be cos(ω_{d}(t)).

The modulation parameter module 292 generates phase modulation information 308 and transmit-property information 310 from the outbound voice symbol stream 302. In one embodiment, the phase information of the symbol (e.g., Φ(t)) may be calculated as tan-1(A_{Q}/A_{I}).

The modulation parameter module 292 generates the transmit property information 310 as a power level setting or as amplitude modulation information. For example, if the data modulation scheme uses phase modulation (e.g., QPSK), then the transmit property information 310 would correspond to the power level setting. In the alternative to the modulation parameter module 292 generating the power level setting, the baseband processing module 100 may generate it.

If the data modulation scheme using both phase and amplitude modulation (e.g., 8-PSK, QAM), then the modulation parameter module 292 would generate the amplitude information. In one embodiment, the amplitude modulation information (e.g., A(t)) is generated as the square root of (A_{I}² +A_{Q}²).

The 1^{st} up-conversion module 294 combines the normalized I symbol 304 with the phase modulation information 308 to produce a phase modulated normalized I symbol 286 (e.g., sin(ω_{d}(t) + Φ(t)). This signal is mixed with an in-phase local oscillation 312 that has a frequency corresponding to carrier frequency of the outbound RF signal and filtered to produce a 1^{st} up-converted signal 316 (e.g., 1/2cos(ω_{RF}(t) - ω_{d}(t) - Φ(t)) - 1/2cos(ω_{RF}(t) + ω_{d}(t) + Φ(t)). The 2^{nd} up-conversion module 296 combines the normalized Q symbol 288 with the phase modulation information 308 to produce a phase modulated normalized Q symbol (e.g., cos(ω_{d}(t) + Φ(t)). This signal is mixed with a quadrature local oscillation 314 that has the same frequency as I LO 312 and filtered to produce the 2^{nd} up-converted signal 318 (e.g., 1/2cos(ω_{RF}(t) - ω_{d}(t) - Φ(t)) + 1/2cos(ω_{RF}(t) + ω_{d}(t) + Φ(t)). The combining module 318 combines the first and second up-converted signals 316 and 318 to produce an RF signal 320 (e.g., cos(ω_{RF}(t) + ω_{d}(t) + Φ(t))).

The power amplifier circuit 300, which may include one or more power amplifier drivers coupled in series and/or in parallel and/or one or more power amplifiers coupled in series and/or in parallel, amplifies the RF signal 320 in accordance with the transmit property information 310. In one embodiment, the transmit property information 310 is a power level setting (e.g., A_{P}) such that the outbound RF signal 80, 92, 86, or 88 may be expressed as A_{P}*cos(ω_{RF}(t) + ω_{d}(t) + Φ(t)). In another embodiment, the transmit property information 310 is the amplitude modulation information (e.g., A(t)) such that the outbound RF signal 80, 92, 86, or 88 may be expressed as A(t)*cos(ω_{RF}(t) + ω_{d}(t) + Φ(t)).

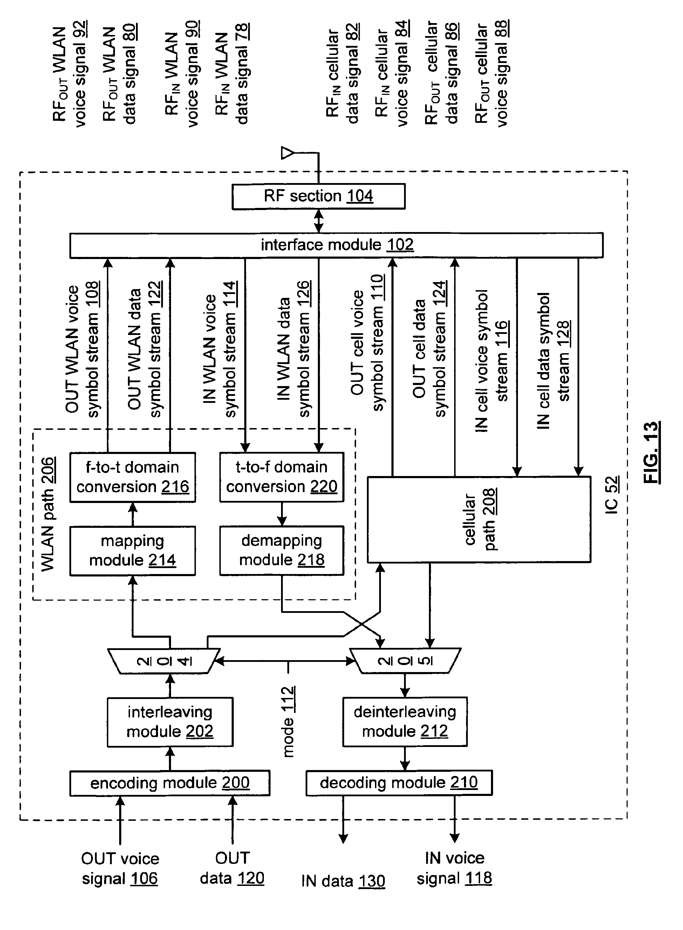

Figure 13 is a schematic block diagram of another embodiment of the integrated circuit (IC) 52 that includes the encoding module 200, the interleaving module 202, the multiplexer 204, the WLAN path 206, the cellular path 208, the demultiplexer 205, the deinterleaving module 212, the decoding module 210, the interface module 102, and the RF section 104.

In this embodiment, the encoding module 200 is coupled to encode an outbound voice signal 106 or an outbound data signal 120 to produce an encoded signal. The interleaving module 202 is coupled to interleave the encoded signal to produce an interleaved signal. When the IC 52 is in a WLAN mode 112, the multiplexer 204 provides the interleaved signal to the WLAN path 206 and, when the IC is in a cellular mode 112, the multiplexer 204 provides the interleaved signal to the cellular path 208.

The WLAN path 206 includes the mapping module 214, the frequency to time domain conversion module 216, the time to frequency domain conversion module 220, and the demapping module 218. When the IC 52 is in the WLAN mode, the mapping module 214 maps the interleaved data into frequency domain symbols. The frequency to time domain conversion module 216 converts the frequency domain symbols into the outbound WLAN voice symbol stream 108 or an outbound WLAN data symbol stream 122.

In the WLAN mode, the RF section 104 converts the outbound WLAN voice symbol stream 108 into an outbound WLAN RF voice signal 92 and/or converts the outbound WLAN data symbol stream 122 into an outbound WLAN RF data signal 80. In addition, the RF section 104 converts an inbound WLAN RF data signal 78 into an inbound WLAN data symbol stream 126 and/or converts an inbound WLAN RF voice signal 90 into an inbound WLAN voice symbol stream 114.

The time to frequency domain conversion module 220 converts the inbound WLAN data symbol stream 126 into inbound WLAN data frequency domain symbols and/or converts the inbound WLAN voice symbol stream 114 into inbound WLAN voice frequency domain symbols. The demapping module 218 demaps the inbound WLAN data frequency domain symbols or the inbound WLAN voice frequency domain symbols to produce inbound WLAN interleaved data.

The demultiplexer 205 provides the inbound WLAN interleaved data the deinterleaving module 212. The deinterleaving module 212 deinterleaves the inbound WLAN interleaved data to produce inbound encoded data. The decoding module 210 decodes the inbound encoded data to produce the inbound voice signal 118 or inbound data 118.

When the IC 52 is in the cellular mode, the multiplexer provides the interleaved data to the cellular path 208. The cellular path 208 converts the interleaved data into the outbound cellular voice symbol stream 110 or the outbound cellular data symbol stream 110. The RF section 104 converts the outbound cellular voice symbol stream 110 into the outbound RF cellular voice signal 88 and converts the outbound cellular data symbol stream 110 into the outbound RF cellular data signal 86.

The RF section 104 also converts the inbound cellular RF data signal 82 into the inbound cellular data symbol stream 128 and converts the inbound cellular RF voice signal 84 into the inbound cellular voice symbol stream 116. The cellular path 208 converts the inbound cellular data symbol stream 128 or the inbound cellular voice symbol stream 116 into inbound interleaved data. The demultiplexer 205 provides the inbound interleaved data to the deinterleaving module 212, which recovers inbound encoded data therefrom. The decoding module 210 decodes the inbound encoded data to produce the inbound data 130 or the inbound voice signal 118.

As may be used herein, the terms "substantially" and "approximately" provides an industry-accepted tolerance for its corresponding term and/or relativity between items. Such an industry-accepted tolerance ranges from less than one percent to fifty percent and corresponds to, but is not limited to, component values, integrated circuit process variations, temperature variations, rise and fall times, and/or thermal noise. Such relativity between items ranges from a difference of a few percent to magnitude differences. As may also be used herein, the term(s) "coupled to" and/or "coupling" and/or includes direct coupling between items and/or indirect coupling between items via an intervening item (e.g., an item includes, but is not limited to, a component, an element, a circuit, and/or a module) where, for indirect coupling, the intervening item does not modify the information of a signal but may adjust its current level, voltage level, and/or power level. As may further be used herein, inferred coupling (i.e., where one element is coupled to another element by inference) includes direct and indirect coupling between two items in the same manner as "coupled to". As may even further be used herein, the term "operable to" indicates that an item includes one or more of power connections, input(s), output(s), etc., to perform one or more its corresponding functions and may further include inferred coupling to one or more other items. As may still further be used herein, the term "associated with", includes direct and/or indirect coupling of separate items and/or one item being embedded within another item. As may be used herein, the term "compares favorably", indicates that a comparison between two or more items, signals, etc., provides a desired relationship. For example, when the desired relationship is that signal 1 has a greater magnitude than signal 2, a favorable comparison may be achieved when the magnitude of signal 1 is greater than that of signal 2 or when the magnitude of signal 2 is less than that of signal 1.

The present invention has also been described above with the aid of method steps illustrating the performance of specified functions and relationships thereof. The boundaries and sequence of these functional building blocks and method steps have been arbitrarily defined herein for convenience of description. Alternate boundaries and sequences can be defined so long as the specified functions and relationships are appropriately performed. Any such alternate boundaries or sequences are thus within the scope and spirit of the claimed invention.

The present invention has been described above with the aid of functional building blocks illustrating the performance of certain significant functions. The boundaries of these functional building blocks have been arbitrarily defined for convenience of description. Alternate boundaries could be defined as long as the certain significant functions are appropriately performed. Similarly, flow diagram blocks may also have been arbitrarily defined herein to illustrate certain significant functionality. To the extent used, the flow diagram block boundaries and sequence could have been defined otherwise and still perform the certain significant functionality. Such alternate definitions of both functional building blocks and flow diagram blocks and sequences are thus within the scope and spirit of the claimed invention. One of average skill in the art will also recognize that the functional building blocks, and other illustrative blocks, modules and components herein, can be implemented as illustrated or by discrete components, application specific integrated circuits, processors executing appropriate software and the like or any combination thereof.

## Claims

1. An integrated circuit (IC) comprises:
a baseband processing module coupled to:
determine when the IC is in a wireless local area network (WLAN) mode;
when the IC is in the WLAN mode, the baseband processing module is further coupled to:
convert an outbound voice signal into an outbound WLAN voice symbol stream;
convert an inbound WLAN voice symbol stream into an inbound voice signal;
convert outbound data into an outbound WLAN data symbol stream; and
convert an inbound WLAN data symbol stream into inbound data;
a radio frequency (RF) section coupled to:
convert an inbound WLAN RF voice signal into the inbound WLAN voice symbol stream;
convert the outbound WLAN voice symbol stream into an outbound WLAN RF voice signal;
convert an inbound WLAN RF data signal into the inbound WLAN data symbol stream; and
convert the outbound WLAN data symbol stream into an outbound WLAN RF data signal; and
an interface module coupled to convey the inbound WLAN voice symbol stream and the outbound WLAN voice symbol stream between the baseband processing module and the RF section when the IC is in a voice mode and to convey the inbound WLAN data symbol stream and the outbound WLAN data symbol stream between the baseband processing module and the RF section when the IC is in a data mode.

2. The IC of claim 1, wherein the determining when the IC is in the WLAN mode comprises:
determining whether the IC is currently affiliated with a basic service set (BSS) or an independent basic service set (IBSS) to establish the WLAN mode;
when the IC is not currently affiliated with the BSS or the IBSS, determining whether the IC can affiliate with the BSS or the IBSS;
when the IC can affiliate with the BSS or the IBSS, affiliating with the BSS or the IBSS to establish the WLAN mode.

3. The IC of claim 2, wherein the determining whether the IC can affiliate with the BSS or the IBSS comprises at least one of:
monitoring for a beacon frame; and
transmitting a probe request frame and monitoring for a response frame.

4. The IC of claim 1, wherein the baseband processing module further functions to:
determining whether the WLAN mode is dropped prior to an end of a current voice or data communication; and
when the WLAN mode is dropped prior to the end of the current voice or data communication, switching to a cellular mode wherein the baseband processing module:
convert the outbound voice signal into an outbound cellular voice symbol stream;
convert an inbound cellular voice symbol stream into the inbound voice signal;
convert the outbound data into an outbound cellular data symbol stream; and
convert an inbound cellular data symbol stream into the inbound data.

5. The IC of claim 1, wherein the baseband processing module further functions to:
determine whether the WLAN mode can be established when the IC is not in the WLAN mode;
when the WLAN mode cannot be established, establish a cellular mode wherein the baseband processing module is further coupled to:
convert the outbound voice signal into an outbound cellular voice symbol stream;
convert an inbound cellular voice symbol stream into the inbound voice signal;
convert the outbound data into an outbound cellular data symbol stream; and
convert an inbound cellular data symbol stream into the inbound data.

6. The IC of claim 5, wherein the baseband processing module further functions to:
determine whether the WLAN mode can be established while in the cellular mode and prior to an end of the current voice or data communication;
when the WLAN mode can be established, switching to the WLAN mode.

7. An integrated circuit (IC) comprises:
an encoding module coupled to encode an outbound voice signal or an outbound data signal to produce an encoded signal;
interleaving module coupled to interleave the encoded signal to produce an interleaved signal;
a multiplexer coupled to provide the interleaved signal to a Wireless Local Area Network (WLAN) path when the IC is in a WLAN mode, to a cellular path when the IC is not in the WLAN mode; and
the WLAN path includes a mapping module and a frequency to time domain conversion module, wherein the mapping module maps the interleaved data into frequency domain symbols and the frequency to time domain conversion module converts the frequency domain symbols into an outbound WLAN voice symbol stream or an outbound WLAN data symbol stream; and
a radio frequency (RF) section coupled to:
convert the outbound WLAN voice symbol stream into an outbound WLAN RF voice signal; and
convert the outbound WLAN data symbol stream into an outbound WLAN RF data signal.

8. The IC of claim 7, wherein the RF section is further coupled to:
convert an inbound WLAN RF data signal into an inbound WLAN data symbol stream; and
convert an inbound WLAN RF voice signal into an inbound WLAN voice symbol stream.

9. The IC of claim 8 further comprises:
a WLAN receive path that includes a time to frequency domain conversion module and a demapping module, the time to frequency domain conversion module converts the inbound WLAN data symbol stream into inbound WLAN data frequency domain symbols and converts the inbound WLAN voice symbol stream into inbound WLAN voice frequency domain symbols, the demapping module demaps the inbound WLAN data frequency domain symbols or the inbound WLAN voice frequency domain symbols to produce inbound WLAN interleaved data;
a demultiplexer coupled to output the inbound WLAN interleaved data from the WLAN receive path when the IC is in the WLAN mode and to output inbound cellular interleaved data when the IC is not in the WLAN mode;
a deinterleaving module coupled to deinterleave the inbound WLAN interleaved data or the inbound cellular interleaved data to produce inbound encoded data; and
a decoding module coupled to decode the inbound encoded data to produce an inbound voice signal or inbound data.

10. The IC of claim 9 further comprises:
the RF section is further coupled to convert an inbound cellular RF data signal into an inbound cellular data symbol stream and convert an inbound cellular RF voice signal into an inbound cellular voice symbol stream;
a cellular data receive path that includes a cellular data time to frequency domain conversion module and a cellular data demapping module, the cellular data time to frequency domain conversion module converts the inbound cellular data symbol stream into inbound cellular data frequency domain symbols and the demapping module demaps the inbound cellular data frequency domain symbols to produce the inbound cellular interleaved data; and
a cellular voice receive path that includes Gaussian Minimum Shift Keying (GMSK) demodulation module and a decryption module, wherein the GMSK demodulation module demodulates the inbound cellular voice symbol stream into an inbound cellular voice encrypted signal and the decryption module decrypts the inbound cellular voice encrypted signal to produce the inbound cellular interleaved data.
